# EUROPEAN PATENT SPECIFICATION

(11) **EP 0 811 313 B1**
(45) Date of publication and mention of the grant of the patent: **19.12.2001**
(21) Application number: 97303640.3
(22) Date of filing: 29.05.1997
(51) Int. Cl.: A01D 34/84, A01D 34/82

(54) **Airborne lawn mower**
Luftgetragener Rasenmäher
Tondeuse à gazon à coussin d'air

(30) Priority: 05.06.1996 GB 9611684; 25.10.1996 GB 9622189
(43) Date of publication of application: 10.12.1997
(73) Proprietor: ELECTROLUX OUTDOOR PRODUCTS LIMITED, Newton Aycliffe, Co Durham DL5 6UP (GB)
(72) Inventor: Crowley, Donald John, Darlington, Co Durham D03 9LX (GB)
(74) Representative: Wright, Howard Hugh Burnby

(56) References cited:
- EP-A- 0 119 339
- WO-A-91/02449
- WO-A-92/03911
- FR-A- 2 390 893
- GB-A- 2 079 575
- US-A- 3 423 912
- US-A- 4 894 980
- US-A- 5 269 125

## Description

This invention relates to a hover lawn mower.

A hover mower has a cutter blade which is rotatable about a vertical axis within a hood, and a source of pressurised air. The pressurised air is directed beneath the hood to form a cushion of air upon which the mower is, at least in part, supported. Such a mower is disclosed in US 3423912.

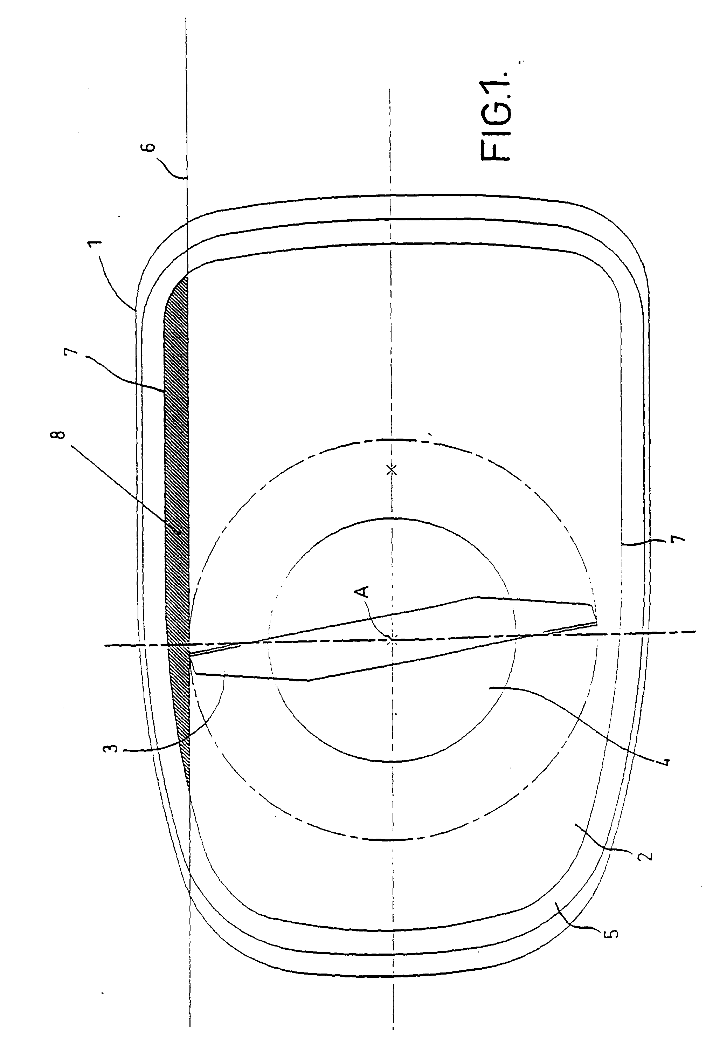

This type of lawn mower has a disadvantage in that, as it is moved over the edge of a lawn which is raised above a surrounding border, the cushion of air escapes to leave the mower unsupported on the ground. The height of cut is reduced causing the cutter blade to scalp the lawn, leaving undesirable scars in the lawn. This loss of pressure also makes it very difficult to push or manoeuvre the mower. These problems are discussed in more detail below in relation to Figure 1.

According to the present invention, a hover lawn mower comprises a hood defining a chamber having a generally rectangular outline, a source of pressurised air for directing pressurised air into the chamber to support the mower above the ground, and a cutter blade mounted for rotation within the chamber about a substantially vertical axis so that the cutter blade defines a circle of rotation, characterised in that the cutter blade is positioned within the chamber in such a manner that the circle of rotation of the cutter blade protrudes outwardly beyond said generally rectangular outline of the chamber.

Preferably, the hood includes a protuberant porton extending outwardly from the generally rectangular outline to surround the outwardly protruding part of the cutter blade. The hood normally includes downwardly depending peripheral walls, at least one of which includes the protuberant portion.

Preferably, the regions of the wall adjacent to the protuberant portion are arranged such that, if they were joined by a generally straight joining wall, that joining wall would lie, at least in part, within the circle of rotation of the cutter blade.

Thus, when the lawn mower is pushed along the edge of the lawn, loss of pressurised air beneath the hood is reduced so that the lawnmower is still supported on a cushion of air thereby permitting the mower to be pushed or manoeuvred more easily than lawnmowers known in the prior art.

Preferably, the lawnmower according to the invention is arranged such that the cutter blade extends outwardly from a side of the hood such that, when the lawnmower is positioned to cut along the edge of a lawn, all of the hood except the protuberant portion is supported by the lawn, and the protuberant portion extends beyond the edge of the lawn. Alternatively, or in addition, the cutter blade extends outwardly from the front of the hood such that, when the lawnmower is positioned to cut up to the edge of a lawn, all of the hood except the protuberant portion is supported by the lawn.

According to one embodiment, an outer wall is disposed outside the peripheral wall. This outer wall may be continuous so as to surround the peripheral wall, and may include dividing walls disposed between the peripheral and outer walls in order to divide the space therebetween into secondary chambers. The peripheral wall can include slots through which pressurised air within the hood is released into the secondary chambers.

According to another embodiment, the lawnmower includes a second cutter blade mounted either for rotation within the chamber, or within a second chamber separate from the first. The two cutter blades may then extend outwardly from more than one part of the hood.

Loss of the pressurised air beneath the hood when cutting to the edge of a lawn is minimised by the invention so that sufficient pressurised air is maintained beneath the hood to support the mower above the ground. The likelihood of scalping of the lawn is reduced, and the lawnmower will remain easy to push and manoeuvrable.

Embodiments of the invention will now be described, by way of example, with reference to the drawings, in which:
Figure 1 shows an underside view of a known lawnmower;
Figure 2 shows an underside view of a lawn mower constructed in accordance with the present invention;
Figure 3 shows an underside view of a modified lawnmower; and
Figure 4 shows a detail of the hood of the modified lawnmower.

Referring to the drawings, Figure 1 shows the underside of a known hover mower having a hood 1 defining a cutting chamber 2 within which a cutter blade 3 is mounted for rotation about a vertical axis A. An impeller 4 is mounted just above the cutter blade 3, and is rotatable with the cutter blade about the axis A. A motor (not shown), which is mounted on the hood 1, drives the cutter blade 3 and the impeller 4 via a drive shaft (not shown). In operation, the impeller 4 draws ambient air from above the hood 1, and directs it in the form of pressurised air into the cutting chamber 2. The pressurised air retained within the cutting chamber 2 by the hood 1 supports the mower above the ground.

The hood 1 is generally rectangular in shape, the corners being radiused. The hood 1 includes an outwardly-turned flange 5 around its rim. In addition to retaining the pressurised air, the hood 1 also acts as a blade guard.

When this known mower is used to cut up to the edge of a lawn, the position of the edge of which being indicated by a line 6 in Figure 1, a side wall 7 of the hood 1 must be pushed beyond the edge 6 of the lawn. This inevitably means that an area 8 (shown hatched in Figure 1) of the cutting chamber 2 will extend beyond the edge 6 of the lawn. The area 8 extends along substantially the entire length of the wall 7 of the hood 1 and is, therefore, large. This results in substantially all of the pressurised air within the cutting chamber 2 escaping, thereby reducing the support of the mower above the lawn. Since the outwardly turned flanges 5 then rest on the ground, the mower becomes difficult to push and manoeuvre. The height of cut is also reduced, leading to the cutter blade 3 scalping the lawn.

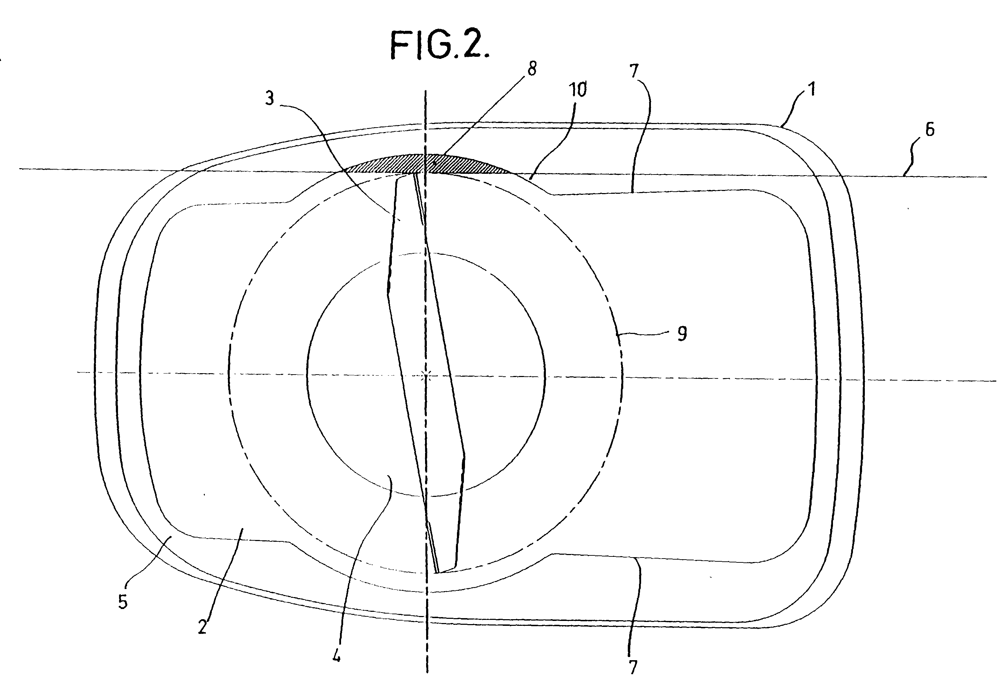

Figure 2 shows a lawnmower constructed in accordance with the invention. This mower is similar to that of Figure 1, and so like reference numerals are used to indicate like parts, and only those features of the mower of Figure 2 which differ from those of Figure 1 are described in detail. Thus, in particular, the shape of the hood 1 is modified, each of the side walls 7 being arranged such that a substantial part of its length lies within the transverse extent of the circle of rotation 9 described by the tip of the cutter blade 3. To enable the cutter blade 3 to rotate without obstruction, the side walls 7 include arcuate protuberant portions 10 which extend transversely around the circle of rotation 9. It will, therefore, be seen that the area 8 (shown hatched in Figure 2) of the cutting chamber 2 which extends beyond the edge 6 of the lawn is reduced, thereby maintaining a greater proportion of the pressurised air beneath the hood 1 should the mower be pushed over the edge 6 of the lawn. Thus, the mower is more manoeuvrable and easier to push than the known lawn mower, since its hood 1 is better supported above the ground. The continued hover support prevents the cutter blade 3 from scalping the lawn, since the cutter blade 3 is supported above the ground. In addition, since less pressurised air escapes, there is less spraying of cut grass from beneath the hood 1, as the area 8 available for such spraying is substantially reduced.

Most hover lawn mowers deposit cut grass at one side of the cutting chamber so that, as the mower is pushed forwards, the cut grass forms a windrow behind the mower. The windrow may be collected by sucking it from the ground through a collection inlet disposed behind the hood 1 in the region of the windrow. In the lawn mower described above with reference to Figure 2, the modifications to the geometry of the cutting chamber 2 could lead to the position of the windrow changing, or could even cause the cut grass constituting the windrow to be spread across the width of the lawnmower. The inlet through which cut grass is collected would then require re-positioning, and possibly re-sizing.

In another embodiment of the invention (not shown), the modification to the shape of the cutting chamber 2 could be made to just one side of the mower, so that a user would have to cut up to a lawn edge 6 using only the modified side. If the side at which the windrow is formed remains unmodified, it is unlikely that the normal position of the collection inlet will need to be changed.

Further, in another embodiment (not shown), the front wall of the hood may be modified in the way described so that a user can push the mower forwards towards a lawn edge in order to cut up to the lawn edge without losing all of the hover support.

In yet another embodiment (not shown) the mower is provided with a second cutter blade. This second cutter blade could be positioned within the same cutting chamber as the first blade, or the two blades could be positioned in separate cutting chambers. In either case, the axes of rotation of the two blades could be laterally-spaced or longitudinally spaced. When the spacing is lateral, there could be modifications to one or both sides of the mower and/or two modifications to the front of the mower. Where the spacing is longitudinal, there could be two modifications to one or both sides of the mower, and/or a modification to the front of the mower.

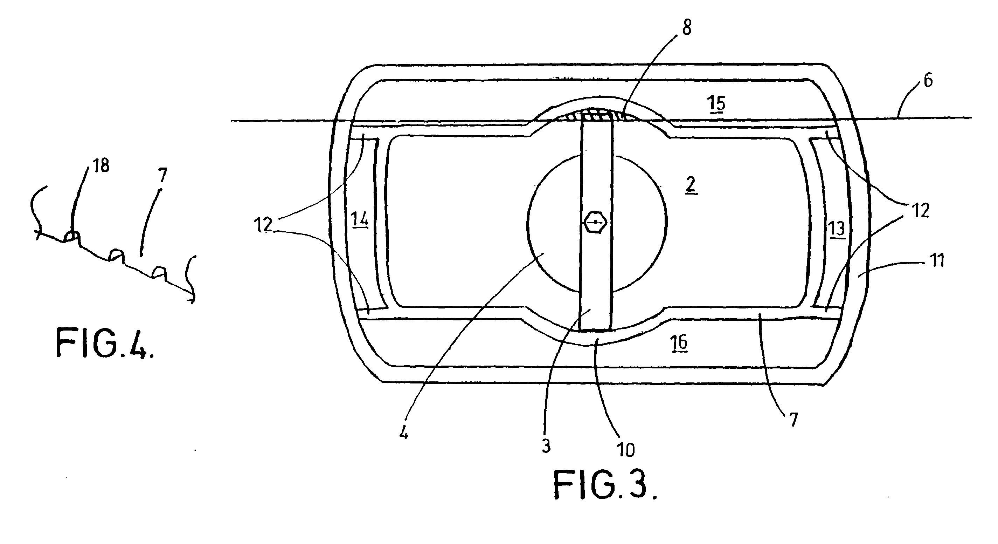

Referring to Figures 3 and 4, a lawnmower is shown which is similar to that shown in Figure 2, but includes some modifications. Thus, like reference numbers are used to indicate like parts, and only the modifications to the lawnmower of Figure 2 are described in detail. In addition to the walls of the hood (including the side walls 7) which defines the cutting chamber 2, a continuous outer wall 11 surrounds the walls of the hood, and the resultant annular space between the walls of the hood and the continuous outer wall 11 is divided into four secondary chambers by partition walls 12. A first secondary chamber 13 is disposed at the front of the machine when considering its normal direction of movement over the ground, and is the same width as the cutting chamber 2, excluding the area of the cutting chamber 2 which extends into the protuberant portion 10. A second secondary chamber 14 is disposed at the rear of the machine and is the same width as the first secondary chamber 13. A third secondary chamber 15 is disposed along the left-hand-side of the machine and extends the whole length of the cutting chamber 2 and the first and second secondary chambers 13,14. A fourth secondary chamber 16 is disposed along the right-hand side of the machine and also extends the whole length of the cutting chamber 2, and the first and second secondary chambers 13,14. The continuous outer wall 11 includes an out-turned flange at its rim which assists in retaining the pressurised air. When the lawnmower is pushed along the edge 6 of a lawn as shown in Figure 3, pressurised air not only escapes into the third secondary chamber 15, but also into the first, second and fourth secondary chambers 13, 14 and 16. Some extra support is therefore derived from the secondary chambers.

In addition, the walls of the hood include optional cut-out slots 18 at their rims, as shown in detail in Figure 4. The slots 18 allow air from the impeller 4 to escape from beneath the hood into the secondary chambers 13, 14, 15 and 16. Alternatively, the passage of air into the secondary chambers may result only from the pressurised air lifting the hood.

## Claims

1. A hover lawn mower comprising a hood (1) defining a chamber (2) having a generally rectangular outline, a source (4) of pressurised air for directing pressurised air into the chamber (2) to support the mower above the ground, and a cutter blade (3) mounted for rotation within the chamber (2) about a substantially vertical axis so that the cutter blade (3) defines a circle (9) of rotation, **characterised in that** the cutter blade (3) is positioned within the chamber (2) in such a manner that the circle (9) of rotation of the cutter blade (3) protrudes outwardly beyond said generally rectangular outline of the chamber (2).

2. A hover lawn mower according to claim 1, wherein the hood (1) includes a protuberant portion (10) extending outwardly from the generally rectangular outline to surround the outwardly protruding part of the cutter blade (3).

3. A hover lawn mower according to claim 2, wherein the hood (1) includes downwardly depending peripheral walls (7), at least one of which includes the protuberant portion (10).

4. A hover lawn mower according to any one of the preceding claims, wherein the regions of the wall adjacent to the protuberant portion (10) are arranged such that, if they were joined by a generally straight joining wall, that joining wall would lie, at least in part, within the circle (9) of rotation of the cutter blade (3).

5. A hover lawn mower according to any one of claims 2 to 4, wherein the cutter blade (3) extends outwardly from a side of the hood (1) such that, when the lawn mower is positioned to cut along the edge of a lawn, all of the hood (1) except the protuberant portion (10) is supported by the lawn.

6. A hover lawn mower according to any one of claims 2 to 5, wherein the cutter blade (3) extends outwardly from the front of the hood (1) such that, when the lawn mower is positioned to cut up to the edge of a lawn, all of the hood (1) except the protuberant portion (10) is supported by the lawn.

7. A hover lawn mower according to any one of claims 2 to 6, wherein at least one of the peripheral walls (7) is separated from the axis of rotation of the cutter blade (3) by a distance of less than the radius of the circle (9) of rotation, and in that the protuberant portion (10) extends outwardly from the rest of the wall (7) to allow the cutter blade (3) to be freely rotatable.

8. A hover lawn mower according to any one of claims 3 to 7, further comprising an outer wall (11) disposed outside the peripheral walls (7).

9. A hover lawn mower according to claim 8, wherein the outer wall (11) is continuous and surrounds the peripheral walls (7).

10. A hover lawn mower according to claim 9, including dividing walls (12) disposed between the peripheral (7) and outer (11) walls for dividing the space therebetween into secondary chambers (13-16).

11. A hover lawn mower according to claim 10, wherein the peripheral walls (7) include slots (18) through which pressurised air within the hood (1) is released into the secondary chambers (13-16).

12. A hover lawn mower according to any one of the preceding claims, further comprising a second cutter blade mounted for rotation within the chamber (2) about a substantially vertical axis so that the second cutter blade defines a second circle of rotation.

13. A hover lawn mower as claimed in claim 12, wherein each of the first and second cutter blades extends outwardly from the hood (1).

14. A hover lawn mower as claimed in claim 13, wherein the first and second cutter blades extend outwardly respectively at the two sides of the mower.

15. A hover lawn mower as claimed in any one of claims 2 to 11, further comprising a second cutter blade mounted for rotation within a second cutting chamber about a substantially vertical axis so that the second cutter blade defines a circle of rotation.

16. A hover lawn mower as claimed in claim 15, wherein the circle of rotation of the second cutter blade extends outwardly from the second cutting chamber.

## Patentansprüche

1. Luftkissenrasenmäher mit einer Haube (1), die eine Kammer (2) mit einem im wesentlichen rechtwinkligen Umriß bildet, einer Druckluftquelle (4) zum Leiten von Druckluft in die Kammer (2) für die Lagerung des Mähers über dem Boden, und mit einer Schneidklinge (3), die zur Drehung innerhalb der Kammer (2) um eine im wesentlichen vertikale Achse so angebracht ist, dass die Schneidklinge (3) einen Drehkreis (9) definiert, **dadurch gekennzeichnet, dass** die Schneidklinge (3) innerhalb der Kammer (2) in einer derartigen Weise angeordnet ist, dass der Drehkreis (9) der Schneidklinge (3) über den im wesentlichen rechtwinkeligen Umriß der Kammer (2) hinausragt.

2. Luftkissenrasenmäher nach Anspruch 1, bei dem die Haube (1) einen vorstehenden Abschnitt (10) aufweist, der sich aus dem im allgemeinen rechtwinkeligen Umriss so nach außen erstreckt, dass er den nach außen vorstehenden Teil der Schneidklinge (3) umgibt.

3. Luftkissenrasenmäher nach Anspruch 2, bei dem die Haube (1) nach unten hängende periphäre Wände (7) aufweist, von denen zumindest eine den vorstehenden Abschnitt (10) aufweist.

4. Luftkissenrasenmäher nach einem der vorhergehenden Ansprüche, bei dem die Bereiche der Wand neben dem vorstehenden Abschnitt (10) derart angeordnet sind, dass, wenn sie durch eine im allgemeinen gerade Verbindungswand verbunden wurden, diese Verbindungswand zumindest teilweise innerhalb des Drehkreises (9) des Schneidklinge (3) liegen würde.

5. Luftkissenrasenmäher nach einem der Ansprüche 2 bis 4, bei dem sich die Schneidklinge (3) aus einer Seite der Haube (1) derartig heraus erstreckt, dass, wenn der Rasenmäher zum Schneiden entlang einer Rasenkante angeordnet ist, die gesamte Haube (1) außer dem vorstehenden Abschnitt (10) durch den Rasen gelagert wird.

6. Luftkissenrasenmäher nach einem der Ansprüche 2 bis 5, bei dem sich die Schneidklinge (3) aus der Vorderseite der Haube (1) derartig heraus erstreckt, dass, wenn der Rasenmäher zum Schneiden einer Rasenkante angeordnet ist, die gesamte Haube (1) außer dem vorstehenden Abschnitt (10) durch den Rasen gelagert wird.

7. Luftkissenrasenmäher nach einem der Ansprüche 2 bis 6, bei dem zumindest eine der periphären Wände (7) von der Drehachse der Schneidklinge (3) durch einen Abstand von weniger als dem Radius des Drehkreises (9) getrennt ist, und bei dem der vorstehende Abschnitt (10) sich aus dem Rest der Wand (7) heraus erstreckt, damit die Schneidklinge (3) frei drehbar ist.

8. Luftkissenrasenmäher nach einem der Ansprüche 3 bis 7, weiterhin mit einer Außenwand (11), die außerhalb der periphären Wände (7) angeordnet ist.

9. Luftkissenrasenmäher nach Anspruch 8, bei dem die Außenwand (11) ununterbrochen ist und die periphären Wände (7) umgibt.

10. Luftkissenrasenmäher nach Anspruch 9, mit Trennwänden (12), die zwischen den periphären (7) und äußeren (11) Wänden angeordnet sind, die zum Trennen des dazwischen liegenden Raumes in Nebenkammern (13 bis 16) vorgesehen sind.

11. Luftkissenrasenmäher nach Anspruch 10, bei dem die periphären Wände (7) Schlitze (18) einschließen, durch die die Druckluft innerhalb der Haube (1) in die Nebenkammern (13 bis 16) freigesetzt wird.

12. Luftkissenrasenmäher nach einem der vorhergehenden Ansprüche, weiterhin mit einer zweiten Schneidklinge zur Drehung innerhalb der Kammer (2) um eine im wesentlichen vertikale Achse, so dass die zweite Schneidklinge einen zweiten Drehkreis definiert.

13. Luftkissenrasenmäher nach Anspruch 12, bei dem jede der ersten und zweiten Schneidklingen sich aus der Haube (1) nach außen erstrecken.

14. Luftkissenrasenmäher nach Anspruch 13, bei dem die ersten und zweiten Schneidklingen sich jeweils an den beiden Seiten des Mähers nach außen erstrecken.

15. Luftkissenrasenmäher nach einem der Ansprüche 2 bis 11, weiterhin mit einer zweiten Schneidklinge, die zur Drehung innerhalb einer zweiten Schneidkammer um eine im wesentlichen vertikale Achse herum angebracht ist, so dass die zweite Schneidklinge einen Drehkreis definiert.

16. Luftkissenrasenmäher nach Anspruch 15, bei dem der Drehkreis der zweiten Schneidklinge sich aus der zweiten Schneidkammer heraus erstreckt.

## Revendications

1. Tondeuse à gazon à coussin d'air comprenant un capot (1) qui définit une chambre (2) ayant un contour sensiblement rectangulaire, une source (4) d'air sous pression pour diriger de l'air sous pression dans la chambre (2) afin de supporter la tondeuse au-dessus du sol, et une lame de coupe (3) montée pour rotation dans la chambre (2) autour d'un axe sensiblement vertical de sorte que la lame de coupe (3) définit un cercle (9) de rotation, **caractérisée en ce que** la lame de coupe (3) est positionnée dans la chambre (2) d'une manière telle que le cercle (9) de rotation de la lame de coupe (3) fait saillie vers l'extérieur au-delà du dit contour sensiblement rectangulaire de la chambre (2).

2. Tondeuse à gazon à coussin d'air selon la revendication 1, dans laquelle le capot (1) comprend une protubérance (10) qui s'étend vers l'extérieur à partir du contour sensiblement rectangulaire de manière à entourer la partie en saillie vers l'extérieur de la lame de coupe (3).

3. Tondeuse à gazon à coussin d'air selon la revendication 2, dans laquelle le capot (1) comprend des parois périphériques s'étendant vers le bas (7), dont au moins une comporte la protubérance (10).

4. Tondeuse à gazon à coussin d'air selon une quelconque des revendications précédentes, dans laquelle les régions de la paroi adjacentes à la protubérance (10) sont agencées de sorte que, si elles étaient reliées par une paroi de liaison sensiblement rectiligne, cette paroi de liaison se trouverait, au moins en partie, à l'intérieur du cercle (9) de rotation de la lame de coupe (3).

5. Tondeuse à gazon à coussin d'air selon une quelconque des revendications 2 à 4, dans laquelle la lame de coupe (3) s'étend vers l'extérieur à partir d'un côté du capot (1) de sorte que, lorsque la tondeuse est en position de coupe le long du bord d'une pelouse, la totalité du capot (1) à l'exception de la protubérance (10) est supportée par la pelouse.

6. Tondeuse à gazon à coussin d'air selon une quelconque des revendications 2 à 5, dans laquelle la lame de coupe (3) s'étend vers l'extérieur à partir de l'avant du capot (1) de sorte que, lorsque la tondeuse est en position de coupe jusqu'au bord d'une pelouse, la totalité du capot (1) à l'exception de la protubérance (10) est supportée par la pelouse.

7. Tondeuse à gazon à coussin d'air selon une quelconque des revendications 2 à 6, dans laquelle au moins une des parois périphériques (7) est séparée de l'axe de rotation de la lame de coupe (3) par une distance inférieure au rayon du cercle (9) de rotation, et la protubérance (10) s'étend vers l'extérieur à partir du reste de la paroi (7) pour permettre à la lame de coupe (3) de tourner librement.

8. Tondeuse à gazon à coussin d'air selon une quelconque des revendications 3 à 7, comprenant en outre une paroi extérieure (11) disposée à l'extérieur des parois périphériques (7).

9. Tondeuse à gazon à coussin d'air selon la revendication 8, dans laquelle la paroi extérieure (11) est continue et entoure les parois périphériques.

10. Tondeuse à gazon à coussin d'air selon la revendication 9, incluant des cloisons (12) disposées entre les parois périphériques (7) et la paroi extérieure (11) pour diviser l'espace entre ces parois en chambres secondaires (13-16).

11. Tondeuse à gazon à coussin d'air selon la revendication 10, dans laquelle les parois périphériques (7) comportent des fentes (18) à travers lesquelles l'air sous pression qui se trouve à l'intérieur du capot (1) est déchargé dans les chambres secondaires (13-16).

12. Tondeuse à gazon à coussin d'air selon une quelconque des revendications précédentes, comprenant en outre une deuxième lame de coupe montée pour rotation à l'intérieur de la chambre (2) autour d'un axe sensiblement vertical, de sorte que la deuxième lame de coupe définit un deuxième cercle de rotation.

13. Tondeuse à gazon à coussin d'air selon la revendication 12, dans laquelle chacune des première et deuxième lames de coupe s'étend vers l'extérieur à partir du capot (1).

14. Tondeuse à gazon à coussin d'air selon la revendication 13, dans laquelle les première et deuxième lames de coupe s'étendent vers l'extérieur respectivement sur les deux côtés de la tondeuse.

15. Tondeuse à gazon à coussin d'air selon une quelconque des revendications 2 à 11, comprenant en outre une deuxième lame de coupe montée pour rotation à l'intérieur d'une deuxième chambre autour d'un axe sensiblement vertical de sorte que la deuxième lame de coupe définit un cercle de rotation.

16. Tondeuse à gazon à coussin d'air selon la revendication 15, dans laquelle le cercle de rotation de la deuxième lame de coupe s'étend vers l'extérieur à partir de la deuxième chambre de coupe.
